# EUROPEAN PATENT APPLICATION

(11) **EP 4 660 734 A1**
(43) Date of publication of application: **10.12.2025**
(21) Application number: 23919284.2
(22) Date of filing: 18.07.2023
(51) Int. Cl.: G05D 1/00

(54) **AUTONOMOUS OPERATION DEVICE, CONTROL METHOD THEREFOR, AND AUTONOMOUS OPERATION SYSTEM**

(30) Priority: 03.02.2023 CN 202310054122; 06.04.2023 CN 202310362897
(71) Applicant: Zhejiang Sunseeker Industrial Co., Ltd., Jinhua, Zhejiang 321042 (CN)
(72) Inventor: LIU, Fangshi, Jinhua, Zhejiang 321042 (CN); WANG, Zhicheng, Jinhua, Zhejiang 321042 (CN)
(74) Representative: Manna, Sara
(86) International application number: PCT/CN2023/107912
(87) International publication number: WO 2024/159719

(57) **Abstract**

An autonomous operation device, a control method therefor, and an autonomous operation system, which relate to the technical field of autonomous operation devices. The control method comprises: during the operation process of an autonomous operation device, detecting whether a boundary signal is received by means of a signal sensing unit (101). If a boundary signal can be received by means of the signal sensing unit, then controlling the autonomous operation device to continue operating (102). If a boundary signal could not be received by means of the signal sensing unit, then controlling the autonomous operation device to stop operating, increasing the amplification multiple of the boundary signal by the autonomous operation device, and re-entering the step of detecting whether a boundary signal is received by means of the signal sensing unit (103). The control method increases the accuracy of determining, on the basis of a boundary signal, whether the autonomous operation device is in an operating area, thereby avoiding a situation where the strength of a boundary signal is so low as to be undetectable, causing operations to stop.

## Description

### CROSS-REFERENCE TO RELATED APPLICATIONS

This patent application claims priority to Chinese Patent Application No. 2023103628971, filed on April 6, 2023 and entitled "AUTONOMOUS OPERATION DEVICE, CONTROL METHOD THEREFOR, AND AUTONOMOUS OPERATION SYSTEM", and Chinese Patent Application No. 2023100541228, filed on February 3, 2023 and entitled "CONTROL METHOD FOR AUTONOMOUS OPERATION DEVICE", which are incorporated herein by reference in their entireties.

### TECHNICAL FIELD

Specific embodiments of the present disclosure relate to the technical field of autonomous operation devices, and in particular, to an autonomous operation device, a control method therefor, and an autonomous operation system.

### BACKGROUND

An autonomous operation device with moving blades typically needs to operate within a working region enclosed by a boundary. During operation, continuous detection is required to determine whether the autonomous operation device remains within the working region. The autonomous operation device may stop the operation and trigger an alarm to prompt user intervention when moving out of the working region. In this case, a user needs to manually trigger a movement instruction and an operation restart instruction to control the autonomous operation device to walk back into the working region for operation. When the autonomous operation device works within a super large working region, the autonomous operation device may also stop the operation and trigger an alarm when reaching a central position of the working region, requiring the user to manually trigger an operation restart instruction. These unnecessary operation stoppages and alarm triggers may reduce the operational efficiency of the autonomous operation device and degrade the user experience.

Taking an intelligent lawn mower as an example, the intelligent lawn mower typically works in a working region with a super large area. If a straight-line distance from a central position of the working region to a boundary exceeds 30 m, the intelligent lawn mower may stop operation and issue out-of-boundary alarm information when traveling to the vicinity of the central position, and the operation of the intelligent lawn mower may continue only after the user manually triggers an operation restart instruction.

Based on the aforementioned technical problems, the applicant proposes the technical solutions of the present disclosure.

### SUMMARY

An object of a specific embodiment of the present disclosure is to provide a control method for an autonomous operation device, an autonomous operation device, and an autonomous operation system. When the autonomous operation device does not receive a boundary signal, the autonomous operation device increases an amplification gain of the boundary signal, enabling the detection of the boundary signal even when the strength of the boundary signal is low due to an excessive distance from the autonomous operation device to a boundary of a working region or due to interference, thereby improving the accuracy of determining whether the autonomous operation device is located within the working region based on the boundary signal. Therefore, during operation of the autonomous operation device within the working region, operation stoppages due to the undetected low-strength boundary signal are avoided, such that the autonomous operation device can be suitable for operation in a working region scenario with a super large area, reducing the probability of false out-of-boundary judgments by the autonomous operation device, and improving the working efficiency and the user experience of the autonomous operation device.

In order to achieve the above object, a specific embodiment of the present disclosure provides a control method for an autonomous operation device, where the control method is applied to an autonomous operation device, the autonomous operation device is movable within a working region enclosed by a boundary, a docking station is configured on the boundary, a boundary signal generation apparatus configured to feed a boundary signal to the boundary is configured on the docking station, and a signal sensing unit configured to sense the boundary signal is configured in the autonomous operation device, and the method includes:
detecting, during a working process of the autonomous operation device within the working region, whether the boundary signal is received through the signal sensing unit, where the boundary signal is configured to indicate that the autonomous operation device is located within the working region;
in the case that the boundary signal is received through the signal sensing unit, controlling the autonomous operation device to continue operation; and
in the case that the boundary signal is not received through the signal sensing unit, controlling the autonomous operation device to stop operation, increasing an amplification gain of the boundary signal by the autonomous operation device, and re-executing the step of detecting whether the boundary signal is received through the signal sensing unit.

A specific embodiment of the present disclosure further provides a non-transitory computer-readable storage medium having stored thereon processor-executable instructions, where the executable instructions are configured to enable a processor of an autonomous operation device to perform the method described above.

A specific embodiment of the present disclosure further provides an autonomous operation device, configured to perform the method described above or the non-transitory computer-readable storage medium described above.

A specific embodiment of the present disclosure further provides an autonomous operation system, including: a boundary, a docking station, and the autonomous operation device described above, where the boundary encloses a working region, the autonomous operation device is movable within the working region, the docking station is located on the boundary, and a boundary signal generation apparatus configured to feed a boundary signal to the boundary is configured on the docking station.

In an embodiment, a first communication unit communicatively connected to the boundary signal generation apparatus is configured on the docking station;
a second communication unit is configured on the autonomous operation device, where the second communication unit is in wireless communication connection with the first communication unit; and
in the case that the boundary signal is not received through the signal sensing unit, before controlling the autonomous operation device to stop the operation and increasing the amplification gain of the boundary signal by the autonomous operation device, the control method for an autonomous operation device further includes:
   detecting whether an indication signal transmitted by the first communication unit is received through the second communication unit, where the indication signal is configured to indicate that the boundary signal generation apparatus is in a working state;
   in the case that the indication signal is received through the second communication unit, controlling the autonomous operation device to continue the operation; and in the case that the indication signal is not received through the second communication unit, executing the step of controlling the autonomous operation device to stop the operation and increasing the amplification gain of the boundary signal by the autonomous operation device. In an embodiment, the method includes: during re-executing the step of detecting whether the boundary signal is received through the signal sensing unit, starting timing in the case that the boundary signal is not received through the signal sensing unit;
   detecting whether a timing duration reaches a preset duration;
   in the case that the timing duration does not reach the preset duration, re-executing the step of increasing the amplification gain of the boundary signal by the autonomous operation device; and
   in the case that the timing duration reaches the preset duration, controlling the autonomous operation device to stop working.

In an embodiment, after the timing duration reaches the preset duration, the control method for an autonomous operation device further includes:
detecting a communication connection state between the autonomous operation device and the docking station;
in the case that the autonomous operation device is connected to the docking station, controlling the autonomous operation device to issue a first alarm signal configured to prompt a user to check whether the boundary signal generation apparatus is normal; and
in the case that the autonomous operation device is disconnected from the docking station, controlling the autonomous operation device to issue a second alarm signal configured to prompt a user to check whether a power supply of the docking station is normal.

In an embodiment, the method further includes:
in the case that the boundary signal is still not received through the signal sensing unit after a preset condition is met, controlling the autonomous operation device to stop working, and
controlling the autonomous operation device to issue a third alarm signal configured to prompt a user to perform manual check, where the preset condition includes: the amplification gain of the boundary signal by the autonomous operation device reaching a maximum amplification gain.

In an embodiment, the method further includes:
determining whether dimension information of the working region meets a preset condition; and
in the case that the dimension information of the working region meets the preset condition, issuing prompt information for prompting to establish the wireless communication connection between the autonomous operation device and the docking station.

In an embodiment, the dimension information of the working region includes at least one or any combination of: a length of an outer boundary of the working region, an area of a region enclosed by the outer boundary of the working region, and a maximum value of a shortest distance from any point within the working region to a boundary line.

In an embodiment, the first communication unit and/or the second communication module is a radio transmission apparatus, and a working frequency of the radio transmission apparatus is any one of 433 MHz, 868 MHz, and 915 MHz.

### BRIEF DESCRIPTION OF THE DRAWINGS

FIG. 1 is a schematic flowchart of a control method for an autonomous operation device according to a first embodiment of the present disclosure;
FIG. 2 is a schematic flowchart of a control method for an autonomous operation device according to a second embodiment of the present disclosure;
FIG. 3 is a schematic structural diagram of an autonomous operation system according to a fourth embodiment of the present disclosure; and
FIG. 4 is a schematic structural diagram of an autonomous operation device according to the fourth embodiment of the present disclosure.

### DETAILED DESCRIPTION

The embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, particular features, structures, or characteristics may be combined in any manner in one or more embodiments.

As used in this specification and the appended claims, the singular forms "a/an" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms. A first embodiment of the present disclosure relates to a control method for an autonomous operation device, which is applied to an autonomous operation device. An autonomous operation device is a robot that can autonomously move within a preset region and perform a specific operation, typically such as an intelligent sweeper/vacuum cleaner performing a cleaning operation, or an intelligent lawn mower performing a lawn mowing operation.

In this embodiment, the autonomous operation device is movable within a working region enclosed by a boundary, and a docking station is configured on the boundary. For example, the boundary is configured as a closed conductive wire, where both ends of the closed conductive wire are connected to the docking station. In this case, the docking station may also be understood as a part of the boundary.

A boundary signal generation apparatus is configured on the docking station, and the boundary signal generation apparatus feeds a boundary signal to the boundary after the boundary signal generation apparatus is electrically connected to the boundary. A signal sensing unit configured to sense the boundary signal is configured on the autonomous operation device.

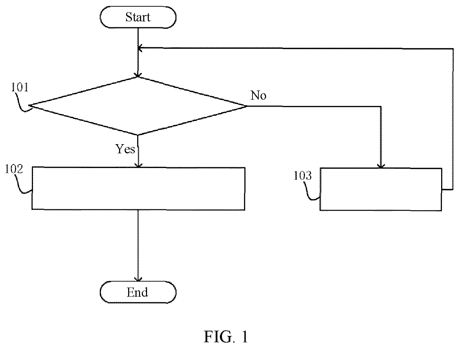

FIG. 1 is a detailed flowchart of the control method for an autonomous operation device in this embodiment.

In step 101, during a working process of the autonomous operation device within the working region, it is detected whether the boundary signal is received through the signal sensing unit, where the boundary signal is configured to indicate that the autonomous operation device is located within the working region. If the boundary signal is received through the signal sensing unit, step 102 is executed; and if the boundary signal is not received through the signal sensing unit, step 103 is executed.

Specifically, after entering a working state, the autonomous operation device moves autonomously and performs operation within the working region. During the working process, the autonomous operation device detects in real time whether the autonomous operation device is located within the working region. For example, the signal sensing unit is configured to sense the boundary signal at a set interval, such that the boundary signal can be received through the signal sensing unit. The sensing of the boundary signal by the signal sensing unit is limited by a distance. When the autonomous operation device moves out of the working region, the signal sensing unit may sense another magnetic signal with a magnetic field direction opposite to that of the boundary signal. In this case, it is determined that the boundary signal is not sensed by the signal sensing unit, and step 103 is executed.

When the autonomous operation device moves to a position within the working region, a shortest distance from the signal sensing unit to the boundary determines whether the signal sensing unit can sense the boundary signal. If the shortest distance from the signal sensing unit to the boundary exceeds a maximum transmission distance of the boundary signal, the signal sensing unit cannot sense the boundary signal due to an excessive distance from the boundary, and step 103 is executed. In this case, the autonomous operation device merely cannot receive the boundary signal, and the autonomous operation device is still located at a position within the working region. If the shortest distance from the signal sensing unit to the boundary does not exceed the maximum transmission distance of the boundary signal, the autonomous operation device can receive the boundary signal through the signal sensing unit, and step 102 is executed.

More specifically, after being electrically connected to the boundary, the boundary signal generation apparatus on the docking station transmits a pulse current to the boundary. After receiving the pulse current, the boundary generates the boundary signal toward the working region enclosed by the boundary, and a magnetic signal in a direction opposite to a current direction of the boundary signal is generated within the working region. For example, a positive pulsed electromagnetic field is generated toward the working region from the boundary, and a negative pulsed electromagnetic field is generated away from the working region from the boundary. When the autonomous operation device works within the working region, the positive pulsed electromagnetic field may be sensed by the built-in signal sensing unit. For example, the signal sensing unit uses an inductor coil. When a shortest distance from the inductor coil to the boundary is within a maximum transmission distance of the positive pulsed electromagnetic field, the inductor coil can sense the positive pulsed electromagnetic field within the working region. When the shortest distance from the inductor coil to the boundary exceeds the maximum transmission distance of the positive pulsed electromagnetic field, the inductor coil cannot sense the positive pulsed electromagnetic field. Generally, a limit value of an induction distance for sensing the positive pulsed electromagnetic field by the inductor coil is between 20 m and 30 m.

In step 102, the autonomous operation device is controlled to continue the operation.

Specifically, if the autonomous operation device receives the boundary signal through the signal sensing unit, it is indicated that the autonomous operation device is located within the working region, and the autonomous operation device is controlled to maintain the current working state and continue to complete the set operational task without intervening in the operation of the autonomous operation device.

In step 103, the autonomous operation device is controlled to stop the operation, an amplification gain of the boundary signal by the autonomous operation device is increased, and then step 101 is re-executed to continue to detect whether the boundary signal is received through the signal sensing unit.

Specifically, in the autonomous operation device, the signal sensing unit is communicatively connected to a control module in the autonomous operation device via an operational amplification circuit, where the operational amplification circuit is configured to amplify the boundary signal sensed by the signal sensing unit and transmit the boundary signal to the control module. The amplification gain of the boundary signal by the operational amplification circuit may be adjusted by the control module.

If the autonomous operation device does not receive the boundary signal through the signal sensing unit, it may be because the autonomous operation device has moved out of the working region, or the autonomous operation device is located within the working region but the signal sensing unit does not sense the boundary signal (e.g., due to the aforementioned conditions such as the excessive distance, signal interference, or malfunction of the signal generation apparatus). The control module first controls an operation mechanism of the autonomous operation device to stop operating. At this time, the autonomous operation device stops the operation, but is still able to continue moving. The autonomous operation device may also increase the amplification gain of the boundary signal by the operational amplification circuit, which may directly increase the amplification gain by the operational amplification circuit to a maximum amplification gain, or increase by a set amplification gain each time until the amplification gain is increased to the maximum amplification gain. For example, with an initial amplification gain of 1x and the maximum amplification gain of 5x, the autonomous operation device increases the amplification gain by 1x each time the autonomous operation device does not receive the boundary signal. If the autonomous operation device does not receive the boundary signal for four consecutive times, the amplification gain of the operational amplification circuit is increased to the maximum amplification gain. In some examples, the autonomous operation device still does not sense the boundary signal after increasing the amplification gain, and the control module starts timing and continuously detects whether a timing duration reaches a preset duration. If the timing duration does not reach the preset duration, the amplification gain of the boundary signal by the operational amplification circuit is increased multiple times during this period, and after each increase of the amplification gain, it is detected whether the boundary signal is received through the signal sensing unit, until the amplification gain is increased to the maximum amplification gain or the timing duration reaches the preset duration. If the boundary signal is still not received through the signal sensing unit at this time, the autonomous operation device stops the operation. For example, the preset duration is set to be 2 seconds. When the amplification gain has been increased for a first time but the boundary signal is still not sensed, the timing is started, with each timing unit being 0.5 seconds. After 0.5 seconds, the control module increases the amplification gain for a second time. If the boundary signal is not sensed, the timing is continued. When the timing reaches 1.5 seconds, the control module increases the amplification gain for a third time, and then determines whether the boundary signal is sensed. If the boundary signal is not sensed, the timing is continued. This cycle is repeated until the timing reaches 2 seconds, at which point the control module controls the operation mechanism of the autonomous operation device to stop operating. During the timing process, it is also possible to add detection of whether the amplification gain of the operational amplification circuit has been increased to the maximum amplification gain. Once the amplification gain has been increased to the maximum amplification gain but the boundary signal is still not sensed, the control module may stop timing and control the operation mechanism of the autonomous operation device to stop operating.

In some examples, a signal sensing unit with adjustable sensitivity is adopted, and in this case, the sensitivity of the signal sensing unit may alternatively be increased to achieve the effect of amplifying the boundary signal.

After increasing the amplification gain, the autonomous operation device returns to step 101, and continues to detect whether the boundary signal is received. If the boundary signal is received, it is indicated that the autonomous operation device remains within the working region, and that the previous failure to receive the boundary signal may be caused by an excessive distance from the autonomous operation device to the boundary or other conditions. If the boundary signal is still not received and a preset condition is met, the autonomous operation device is controlled to stop the operation, and the autonomous operation device is controlled to issue an alarm signal, where the alarm signal is configured to prompt a user to perform manual check, for example, to check whether the boundary signal generation apparatus works normally, whether the autonomous operation device has indeed walked out of the working region, and whether the signal sensing unit in the autonomous operation device works normally. The preset condition is, for example, that a current amplification gain of the operational amplification circuit is the maximum amplification gain, or that a number of consecutive failures to detect the boundary signal reaches a preset number.

The autonomous operation device may issue the alarm signal in any one of the following manners: via a built-in audible alarm (such as a buzzer) or light-emitting alarm (such as an LED light) in the autonomous operation device. In some examples, the autonomous operation device is provided with a built-in wireless communication module including WiFi and/or cellular networks. The autonomous operation device is connected to a user terminal through the wireless communication module, and the autonomous operation device directly transmits a first alarm signal and a second alarm signal to the user terminal. The user terminal is, for example, a mobile phone, a tablet computer, a desktop host, etc.

Taking an intelligent lawn mower as an example, when the intelligent lawn mower cannot receive the boundary signal through the signal sensing unit, the intelligent lawn mower will first stop mowing, increase the amplification gain of the boundary signal, and then continue the mowing after receiving the boundary signal through the signal sensing unit.

A second embodiment of the present disclosure relates to a control method for an autonomous operation device. Compared with the first embodiment, a major improvement of this embodiment is that the determination of a wireless communication state between the docking station and the autonomous operation device and the transmission of an indication signal between the docking station and the autonomous operation device are added in this embodiment, so as to further improve the accuracy of determining whether the autonomous operation device is located within the working region.

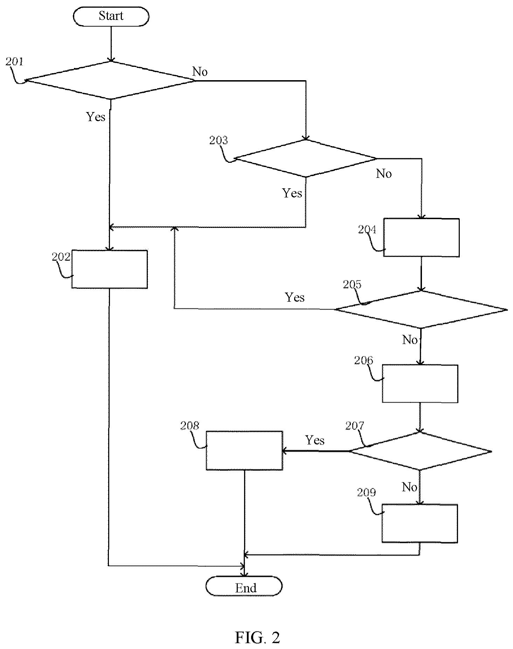

A detailed flowchart of the control method for an autonomous operation device in this embodiment is shown in FIG. 2.

In this embodiment, a first communication unit is configured on the docking station, where the first communication unit is communicatively connected to the boundary signal generation apparatus; and a second communication unit is configured on the autonomous operation device, where the second communication unit is in wireless communication connection with the first communication unit. Each of the first communication unit configured on the docking station and the second communication unit configured on the autonomous operation device is configured as a radio transmission apparatus. A working frequency used by the radio transmission apparatus may be 433 MHz, 868 MHz, or 915 MHz, and the wireless transmission apparatus is, for example, an ultra-high frequency (UHF) transmission apparatus.

In step 201, during a working process of the autonomous operation device within the working region, it is detected whether the boundary signal is received through the signal sensing unit. If the boundary signal is received through the signal sensing unit, step 202 is executed; and if the boundary signal is not received through the signal sensing unit, step 203 is executed. This is substantially the same as step 101 in the first embodiment, and will not be repeated here.

In step 202, the autonomous operation device is controlled to continue the operation. This is substantially the same as step 102 in the first embodiment, and will not be repeated here.

In step 203, it is detected whether an indication signal received by the first communication unit is received through the second communication unit. If the indication signal is received through the second communication unit, step 202 is executed; and if the indication signal is not received through the second communication unit, step 204 is executed.

In step 204, the autonomous operation device is controlled to suspend the operation, and the amplification gain of the boundary signal by the autonomous operation device is increased. This is substantially the same as step 103 in the first embodiment, and will not be repeated here. In step 205, it is detected whether the boundary signal is received through the signal sensing unit. If the boundary signal is received through the signal sensing unit, step 202 is executed; and if the boundary signal is not received through the signal sensing unit, step 206 is executed.

In step 206, the autonomous operation device is controlled to suspend the operation.

Specifically, when the signal generation apparatus is in a normal working state, the signal generation apparatus transmits an indication signal to the first communication unit, where the indication signal is configured to indicate that the boundary signal generation apparatus is in a working state. The first communication unit may receive the indication signal, and transmit the indication signal to the second communication unit. For example, the first communication unit adopts an ultra-high frequency radio transmission apparatus, which uses a working frequency of 868 MHz. The apparatus emits a direct wave that extends above a work surface of the autonomous operation device, and the direct wave is the indication signal. The second communication unit adopts an ultra-high frequency radio transmission apparatus matched with the first communication unit. The second communication unit and the first communication unit are connected to each other, and the second communication unit can receive the direct wave emitted by the first communication unit. It should be noted that signal transmission between the first communication unit and the second communication unit further includes other types of signal transmission, for example, transmission of a communication signal. The indication signal may be embedded in the communication signal, or may be transmitted separately. When the autonomous operation device does not receive the boundary signal through the signal sensing unit, if the indication signal is received through the second communication unit, it is determined that the autonomous operation device is located within the working region at this time. That is, it is considered that the autonomous operation device is located within the working region at this time regardless of whether the boundary signal is received, and step 202 is executed to control the autonomous operation device to continue the operation. If the indication signal is not received through the second communication unit, this indicates a communication obstacle between the first communication unit and the second communication unit. For example, during the movement of the autonomous operation device, a path between the first communication unit and the second communication unit is blocked by a building, vegetation, or a tall rock. In this case, step 204 is executed to control the autonomous operation device to suspend the operation and increase the amplification gain of the boundary signal by the autonomous operation device, and then step 205 is executed to determine whether the autonomous operation device is located within the working region by detecting whether the autonomous operation device receives the boundary signal through the signal sensing unit.

In some examples, in step 205, if the boundary signal is not received through the signal sensing unit, timing is started. During the timing process, the amplification gain of the boundary signal is increased one or more times to detect whether the boundary signal is received. If the boundary signal is received during the timing process, it is indicated that the autonomous operation device remains within the working region, and step 202 is executed. If the boundary signal is still not received by the end of the timing, step 206 is executed to control the autonomous operation device to suspend the operation.

In step 207, a communication connection state between the autonomous operation device and the docking station is detected. If the communication connection state is a connected state, step 208 is executed; and if the communication connection state is a disconnected state, step 209 is executed.

In step 208, the autonomous operation device is controlled to issue a first alarm signal configured to prompt a user to check whether the boundary signal generation apparatus is normal.

In step 209, the autonomous operation device is controlled to issue a second alarm signal configured to prompt a user to check whether a power supply of the docking station is normal. Specifically, the first communication unit on the docking station is communicatively connected to the second communication unit of the autonomous operation device, that is, the docking station is in wireless communication connection with the autonomous operation device. During the working process of the autonomous operation device, the communication connection state between the autonomous operation device and the docking station is determined by detecting the communication connection state between the first communication unit and the second communication unit.

When the autonomous operation device needs to be controlled to suspend the operation, it is indicated that the operation of the autonomous operation device or the docking station has encountered a fault. In this case, the cause of the fault needs to be identified for repair. When the communication connection state is the disconnected state, it is indicated that the operation of the docking station has encountered a fault. A troubleshooting means used in this embodiment is to detect the wireless communication connection state between the first communication unit and the second communication unit, that is, the communication connection state between the autonomous operation device and the docking station. If the autonomous operation device is connected to the docking station, it is indicated that the boundary signal generation apparatus on the docking station has encountered a fault. In this case, the autonomous operation device issues the first alarm signal to prompt the user to intervene in the boundary signal generation apparatus on the docking station. If the autonomous operation device is disconnected from the docking station, it is indicated that all communication pathways between the docking station and the autonomous operation device have been interrupted, and it is necessary to check whether the power supply of the docking station is normal. In this case, the autonomous operation device issues the second alarm signal to prompt the user to check the working status of the power supply of the docking station.

In some examples, the first alarm signal and the second alarm signal are issued by a built-in audible alarm (such as a buzzer) or light-emitting alarm (such as an LED light) in the autonomous operation device. In some examples, the autonomous operation device is provided with a built-in wireless communication module including WiFi and/or cellular networks. The autonomous operation device is connected to a user terminal through the wireless communication module, and the autonomous operation device directly transmits the first alarm signal and the second alarm signal to the user terminal. The user terminal is, for example, a mobile phone, a tablet computer, a desktop host, etc.

In some examples, when the autonomous operation device is initialized, the working region is adjusted, or the autonomous operation device works for a first time, dimension information of the current working region is acquired, and it is determined whether the dimension information of the working region meets a preset condition. If the dimension information of the working region meets the preset condition, prompt information for prompting to establish the wireless communication connection between the autonomous operation device and the docking station is issued, so as to prompt that the working region is too large and the wireless communication connection needs to be established with the docking station to assist in determining whether the autonomous operation device is located within the working region.

Specifically, when the autonomous operation device works for the first time, the autonomous operation device walks around an outer boundary of the working region for one cycle. A built-in odometer or positioning apparatus in the autonomous operation device obtains a length and a shape of the boundary, such that an area of the working region can be calculated based on the length and the shape. An electronic map of the working region may be further established. Based on the electronic map, a shortest distance from each position within the working region to the boundary is calculated, so as to obtain a maximum value of the shortest distance. In this way, the dimension information of the working region is acquired. The dimension information of the working region includes at least one or any combination of: a length of the outer boundary, an area of a region enclosed by the outer boundary, and the maximum value of the shortest distance from any point within the working region to a boundary line.

After the dimension information of the working region is acquired, it is determined that the dimension information of the working region meets the preset condition if any one of the following conditions is met: the length of the boundary is greater than a preset length threshold, the area of the working region is greater than a preset area threshold, and the maximum value of the shortest distance from any point within the working region to the boundary is greater than a preset distance threshold.

If the autonomous operation device is already equipped with a radio transmission apparatus, the radio transmission apparatus may be configured to be turned on or off. When the dimension information of the working region meets the preset condition, the radio transmission apparatus is configured to be in an "on" state to establish the wireless communication connection with the docking station. When the dimension information of the working region does not meet the preset condition, the radio transmission apparatus is configured to be in an "off" state.

If the autonomous operation device is not equipped with a radio transmission apparatus, when the dimension information of the working region meets the preset condition, the prompt information for prompting to establish the wireless communication connection between the autonomous operation device and the docking station is issued, so as to prompt the user to additionally install a radio transmission apparatus.

That is, in actual use, the radio transmission apparatuses on the docking station and the autonomous operation device are optional apparatuses. The radio transmission apparatus may be equipped when the user purchases the autonomous operation device or the docking station, or may be additionally installed after purchase.

A third embodiment of the present disclosure relates to an autonomous operation device. The autonomous operation device is a robot that can autonomously move within a preset region and perform a specific operation, typically such as an intelligent sweeper/vacuum cleaner performing a cleaning operation, or an intelligent lawn mower performing a lawn mowing operation. The autonomous operation device is configured to perform the control method for an autonomous operation device in the first embodiment or the second embodiment.

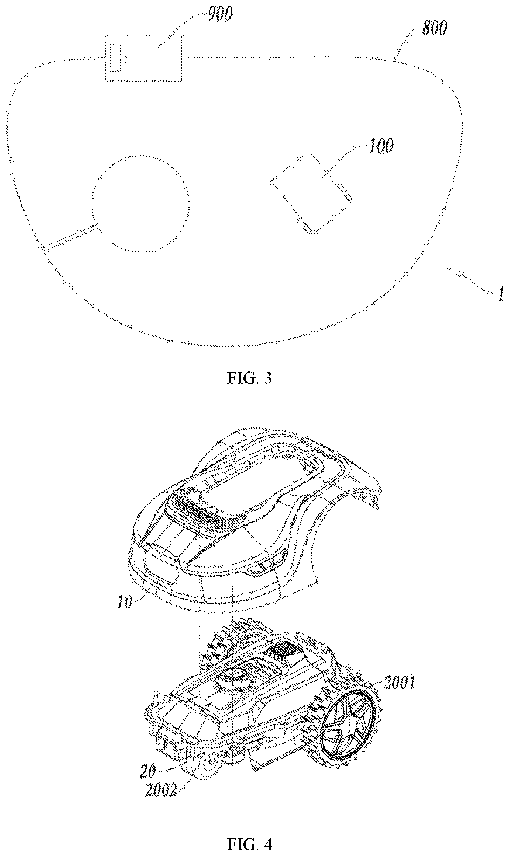

As shown in FIG. 3, a fourth embodiment of the present disclosure relates to an autonomous operation system 1 including an autonomous operation device 100, a docking station 900, and a boundary 800.

The autonomous operation device 100 is, in particular, a robot that can autonomously move within a preset region and perform a specific operation, typically such as an intelligent sweeper/vacuum cleaner performing a cleaning operation, or an intelligent lawn mower performing a lawn mowing operation. The specific operation, in particular, refers to an operation that processes a work surface and changes the state of the work surface. The present disclosure is described in detail by taking an intelligent lawn mower as an example. The autonomous operation device 100 can autonomously walk on the surface of a working region, and in particular, as an intelligent lawn mower, can autonomously perform a lawn mowing operation on the ground. The autonomous operation device 100 at least includes a main body mechanism, a moving mechanism, a working mechanism, an energy module, a detection module, an interaction module, a control module, and the like. The control module is configured to perform the control method in the first embodiment or the second embodiment. As shown in FIG. 4, the main body mechanism typically includes a chassis 20 and a housing 10. The chassis 20 is configured to install and accommodate functional mechanisms and functional modules, such as the moving mechanism, the working mechanism, the energy module, the detection module, the interaction module, and the control module. The housing 10 is typically configured to at least partially cover the chassis 20, primarily for enhancing the aesthetics and recognizability of the autonomous operation device 100. In this embodiment, the housing 10 is configured to be capable of resettable translation and/or rotation relative to the chassis 20 under an external force. In cooperation with a suitable detection module, such as a Hall sensor, the housing can further serve to detect events like collisions and lifting.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In this embodiment, the moving mechanism is a wheeled moving mechanism, including at least one driving wheel 2001 and at least one walking prime mover. The walking prime mover is preferably a motor, and in other embodiments, the walking prime mover may be an internal combustion engine or a machine that uses other types of energy sources to generate power. In this embodiment, the walking prime mover is preferably provided with a left driving wheel, a left walking prime mover that drives the left driving wheel, a right driving wheel, and a right walking prime mover that drives the right driving wheel. In this embodiment, the straight-line movement of the autonomous operation device is achieved by the equidirectional and constant-speed rotation of the left and right driving wheels, and the steering movement is achieved by the equidirectional and differential-speed rotation or the opposite-direction rotation of the left and right driving wheels. In other embodiments, the moving mechanism may further include a steering mechanism independent of the driving wheels and a steering prime mover independent of the walking prime mover. In this embodiment, the moving mechanism further includes at least one driven wheel 2002, typically configured as a universal wheel. The driving wheel 2001 and the driven wheel 2002 are located at the front and rear ends of the autonomous operation device, respectively.

The working mechanism is configured to perform a specific operational task and includes a working component and a working prime mover driving the working component to operate. Exemplarily, for an intelligent sweeper/vacuum cleaner, the working component includes a roller brush, a dust suction pipe, a dust collection chamber, and the like; for an intelligent lawn mower, the working component includes a cutting blade or a cutting deck, and further includes other components for optimizing or adjusting the mowing effect, such as a height adjustment mechanism for adjusting the mowing height. The working prime mover is preferably a motor, and in other embodiments, the working prime mover may be an internal combustion engine or a machine that uses other types of energy sources to generate power. In some other embodiments, the working prime mover and the walking prime mover 110 are configured as the same prime mover.

The energy module is configured to provide energy for various tasks of the autonomous operation device 100. In this embodiment, the energy module includes a battery and a charging connection structure. The battery is preferably a rechargeable battery, and the charging connection structure is preferably a charging electrode that may be exposed outside the autonomous operation device.

The detection module is configured as at least one sensor that senses an environmental parameter or a working parameter of the autonomous operation device 100. Typically, the detection module may include sensors related to the definition of the working region, such as magnetic induction, collision, ultrasonic, infrared, radio, and various types. The types of sensors are adapted to the position and number of the corresponding signal generation apparatuses. The detection module may further include positioning navigation-related sensors such as GPS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor.

The interaction module is configured at least to receive control instruction information inputted by a user, transmit information requiring user perception, and communicate with other systems or devices to transmit and receive information. In this embodiment, the interaction module includes an input apparatus arranged on the autonomous operation device 100 for receiving control instruction information inputted by a user, typically such as a control panel and an emergency stop key. The interaction module further includes a display screen, an indicator light, and/or a buzzer arranged on the autonomous operation device 100, enabling a user to perceive information through light or sound. In other embodiments, the interaction module includes a communication module arranged on the autonomous operation device 100 and a terminal device independent of the autonomous operation device 100, such as a mobile phone, a computer, or a network server. User control instruction information or other information may be inputted on the terminal device and reach the autonomous operation device 100 via a wired or wireless communication module.

The control module typically includes at least one processor and at least one non-volatile memory. The memory stores a pre-written computer program or an instruction set, and the processor, according to the computer program or the instruction set, controls the performance of movements, work, and the like of the autonomous operation device 100. Further, the control module can also control and adjust the corresponding actions of the autonomous operation device 100 and modify parameters in the memory according to a signal from the detection module and/or a user control instruction.

The boundary 800 is configured to define a working region of the robotic system and typically includes an outer boundary 8001 and an inner boundary 8002. The autonomous operation device 100 is constrained to moving and working within the outer boundary 8001, outside the inner boundary 8002, or between the outer boundary 8001 and the inner boundary 8002. The boundary may be solid, typically such as a wall, fence, or railing; the boundary may also be virtual, typically such as a virtual boundary signal issued by a boundary signal generation apparatus, which is usually an electromagnetic signal or an optical signal, or a virtual boundary set in an electronic map, for example formed by two-dimensional or three-dimensional coordinates, for an autonomous operation device 100 provided with a positioning apparatus (such as GPS). In this embodiment, the boundary 800 is configured as a closed conductive wire that is electrically connected to the boundary signal generation apparatus which is typically arranged in the docking station 900.

The docking station 900 is typically configured on the boundary 800 or within the boundary 800 for the autonomous operation device 100 to dock, especially for supplying energy to the autonomous operation device 100 docked at the docking station.

The preferred embodiments of the present disclosure have been described in detail above. However, it should be understood that an aspect of the embodiments can be modified, if necessary, to employ aspects, features, and concepts of various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

## Claims

1. A control method for an autonomous operation device, wherein the control method is applied to an autonomous operation device, the autonomous operation device is movable within a working region enclosed by a boundary, a docking station is configured on the boundary, a boundary signal generation apparatus configured to feed a boundary signal to the boundary is configured on the docking station, and a signal sensing unit configured to sense the boundary signal is configured in the autonomous operation device, and the method comprises:
detecting, during a working process of the autonomous operation device within the working region, whether the boundary signal is received through the signal sensing unit, wherein the boundary signal is configured to indicate that the autonomous operation device is located within the working region;
in a case that the boundary signal is received through the signal sensing unit, controlling the autonomous operation device to continue operation; and
in a case that the boundary signal is not received through the signal sensing unit, controlling the autonomous operation device to stop operation, increasing an amplification gain of the boundary signal by the autonomous operation device, and re-executing the step of detecting whether the boundary signal is received through the signal sensing unit.

2. The control method for an autonomous operation device according to claim 1, wherein a first communication unit communicatively connected to the boundary signal generation apparatus is configured on the docking station;
a second communication unit is configured on the autonomous operation device, wherein the second communication unit is in wireless communication connection with the first communication unit; and
in the case that the boundary signal is not received through the signal sensing unit, before controlling the autonomous operation device to stop the operation and increasing the amplification gain of the boundary signal by the autonomous operation device, the control method further comprises:
detecting whether an indication signal transmitted by the first communication unit is received through the second communication unit, wherein the indication signal is configured to indicate that the boundary signal generation apparatus is in a working state;
in a case that the indication signal is received through the second communication unit, controlling the autonomous operation device to continue the operation; and
in a case that the indication signal is not received through the second communication unit, executing the step of controlling the autonomous operation device to stop the operation and increasing the amplification gain of the boundary signal by the autonomous operation device.

3. The control method for an autonomous operation device according to claim 1, further comprising:
during re-executing the step of detecting whether the boundary signal is received through the signal sensing unit, starting timing in the case that the boundary signal is not received through the signal sensing unit;
detecting whether a timing duration reaches a preset duration;
in a case that the timing duration does not reach the preset duration, re-executing the step of increasing the amplification gain of the boundary signal by the autonomous operation device; and
in a case that the timing duration reaches the preset duration, controlling the autonomous operation device to stop working.

4. The control method for an autonomous operation device according to claim 3, wherein after the timing duration reaches the preset duration, the control method further comprises:
detecting a communication connection state between the autonomous operation device and the docking station;
in a case that the autonomous operation device is connected to the docking station, controlling the autonomous operation device to issue a first alarm signal configured to prompt a user to check whether the boundary signal generation apparatus is normal; and
in a case that the autonomous operation device is disconnected from the docking station, controlling the autonomous operation device to issue a second alarm signal configured to prompt a user to check whether a power supply of the docking station is normal.

5. The control method for an autonomous operation device according to claim 1, further comprising:
in a case that the boundary signal is still not received through the signal sensing unit after a preset condition is met, controlling the autonomous operation device to stop working, and controlling the autonomous operation device to issue a third alarm signal configured to prompt a user to perform manual check, wherein the preset condition comprises: the amplification gain of the boundary signal by the autonomous operation device reaching a maximum amplification gain.

6. The control method for an autonomous operation device according to claim 2, further comprising:
determining whether dimension information of the working region meets a preset condition; and
in a case that the dimension information of the working region meets the preset condition, issuing prompt information for prompting to establish the wireless communication connection between the autonomous operation device and the docking station.

7. The control method for an autonomous operation device according to claim 6, wherein the dimension information of the working region comprises at least one or any combination of: a length of an outer boundary of the working region, an area of a region enclosed by the outer boundary of the working region, and a maximum value of a shortest distance from any point within the working region to a boundary line.

8. The control method for an autonomous operation device according to claim 2, wherein the first communication unit and/or the second communication module is a radio transmission apparatus, and a working frequency of the radio transmission apparatus is any one of 433 MHz, 868 MHz, and 915 MHz.

9. A non-transitory computer-readable storage medium having stored thereon processor-executable instructions, wherein the executable instructions are configured to enable a processor of an autonomous operation device to perform the control method according to any one of claims 1 to 8.

10. An autonomous operation device, configured to perform the control method for an autonomous operation device according to any one of claims 1 to 8, or comprising the non-transitory computer-readable storage medium according to claim 9.

11. An autonomous operation device control system, comprising: a boundary, a docking station, and the autonomous operation device according to claim 10, wherein the boundary encloses a working region, the autonomous operation device is movable within the working region, the docking station is located on the boundary, and a boundary signal generation apparatus configured to feed a boundary signal to the boundary is configured on the docking station.
